# EUROPÄISCHE PATENTSCHRIFT

(11) **EP 3 247 932 B1**
(45) Veröffentlichungstag und Bekanntmachung des Hinweises auf die Patenterteilung: **25.12.2019**
(21) Anmeldenummer: 16701447.1
(22) Anmeldetag: 21.01.2016
(51) Int. Cl.: F16L 55/033, B65G 47/91, F16L 55/052

(54) **SCHALLDÄMPFER FÜR SAUGGREIFER**
SOUND ABSORBER FOR VACUUM GRIPPERS
SILENCIEUX POUR PINCE ASPIRANTE

(30) Priorität: 21.01.2015 DE 102015200966
(43) Veröffentlichungstag der Anmeldung: 29.11.2017
(73) Patentinhaber: Deutsches Institut für Lebensmitteltechnik e.V., 49610 Quakenbrück (DE)
(72) Erfinder: HUKELMANN, Bernhard, 49610 Quakenbrück (DE)
(74) Vertreter: Taruttis, Stefan Georg
(86) Internationale Anmeldenummer: PCT/EP2016/051254
(87) Internationale Veröffentlichungsnummer: WO 2016/116572

(56) Entgegenhaltungen:
- EP-A1- 1 541 856
- DE-A1- 2 238 657
- DE-C- 886 249
- US-A- 2 675 823
- US-A- 2 893 434
- US-A- 5 732 741

## Beschreibung

Die Erfindung betrifft einen Schalldämpfer für unter Druck stehendes Abgas, das insbesondere Abgas eines Sauggreifers ist, das z.B. Druckluft und angesaugte Luft aufweist, sowie insbesondere einen Sauggreifer mit dem Schalldämpfer bzw. ein Verfahren zum Dämpfen des Schalls, der beim Freisetzen von unter Druck stehendem Abgas in die Umgebung abgegeben wird. Bevorzugt weist das Abgas eine Temperatur von bis zu 70 °C auf, z.B. 0 bis 50 °C.

### Stand der Technik

Die EP 2415696 B1 beschreibt einen Sauggreifer mit einem Zentralrohr, das unter Druckluftzufuhr an ein erstes Ende Luft ansaugt und durch eine gegenüberliegende zweite Öffnung austreten lässt, wobei zur Schalldämpfung eine Leitung oder ein Gehäuse angrenzend an die zweite Öffnung angeordnet sein kann.

Die US 2,893,434 A beschreibt für ein Hydrauliksystem einen Vibrationsdämpfer, der in einem Gehäuse einen umfänglich geschlossenen elastischen Schlauch aufweist, dessen Innenvolumen an einem Ende mit dem Hydrauliksystem verbunden werden kann. Das Innenvolumen bzw. der Innenquerschnitt des elastischen Schlauchs kann durch Verdrehen von einem seiner Enden gegen das andere Ende oder durch Belasten mit einer längs des Schlauchs verschieblichen Rolle verändert werden.

Die DE 2 238 657 A beschreibt einen Schalldampfer für Hochspannungs-Druckgasschalter mit einem Expansionsraum, durch den hindurch das Druckgas ins Freie geführt ist, wobei die Wand des Expansionsraumes zumindest teilweise als gummielastische Membran ausgebildet ist, die mit Poren versehen ist, die sich beim Auftreten eines Staudruckes öffnen und durch die allein das Druckgas aus dem Expansionsraum ausströmen kann.

### Aufgabe der Erfindung

Der Erfindung stellt sich die Aufgabe, einen Schalldämpfer und ein Verfahren zur Schalldämpfung für unter Druck stehendes Abgas bereitzustellen, das an die Umgebung abgegeben wird. Eine bevorzugte Aufgabe liegt in der Bereitstellung eines Schalldämpfers und eines Verfahrens zur Schalldämpfung für einen Sauggreifer. Bevorzugt soll der Schalldämpfer einen einfachen Aufbau haben und z.B. für die Reinigung in einer Spülmaschine einfach zu zerlegen und anschließend zusammenzubauen sein.

### Beschreibung der Erfindung

Die Erfindung löst die Aufgabe mit den Merkmalen der unabhängigen Ansprüche, insbesondere durch einen Schalldämpfer und ein Verfahren zur Schalldämpfung mit dem Schalldämpfer, der ein Gehäuse mit einem Einlass zur Verbindung mit der Abgasleitung eines Sauggreifers aufweist, wobei das Gehäuse zumindest einen elastischen Abschnitt mit zumindest einer Durchbrechung aufweist. In einem Abstand vom Einlass verschließt der elastische Abschnitt das Gehäuse, wobei die zumindest eine Durchbrechung den Auslass des Gehäuses bildet. Das Gehäuse weist daher einen Einlass zur Verbindung mit der Abgasleitung eines Sauggreifers auf und zumindest einen Auslass, der durch zumindest eine Durchbrechung in dem elastischen Abschnitt gebildet ist. Der elastische Abschnitt weist eine Elastizität auf, die bei Beaufschlagung mit unter Druck stehendem Abgas eine Dehnung und Vergrößerung der Durchbrechung zu einer Öffnung erlaubt, die größer ist als die Öffnung der Durchbrechung ohne die Beaufschlagung mit dem unter Druck stehenden Abgas.

Der zumindest eine elastische Abschnitt überdeckt Öffnungen des Gehäuses, die das Gehäuse zusätzlich zu zumindest einem Einlass für Abgas bzw. zur Verbindung mit einer Abgasleitung aufweist. Der elastische Abschnitt kann z.B. einen Abschnitt der Wandung des Gehäuses bilden, wobei nur die zumindest eine Durchbrechung des elastischen Abschnitts den Auslass des Gehäuses bildet.

Der elastische Abschnitt kann unmittelbar an dem Gehäuse befestigt sein oder in einem Element, das zumindest zwei Öffnungen aufweist, die jeweils von einem elastischen Abschnitt verschlossen sind.

Der elastische Abschnitt kann aus elastischem Material bestehen und zumindest eine Öffnung des Gehäuses überdecken, wobei der elastische Abschnitt z.B. mittels eines Rahmens, der am Gehäuse angeordnet ist, gehaltert ist. Der elastische Abschnitt kann abschnittsweise oder vollständig verschieblich am Gehäuse gehaltert sein.

Es hat sich gezeigt, dass zumindest eine Durchbrechung in zumindest einem elastischen Abschnitt des Elements zu einer effektiven Dämpfung des Schalls führt, der mit dem Abgas eines Sauggreifers an die Umgebung abgegeben wird.

Die Beaufschlagung des elastischen Abschnitts mit unter Druck stehendem Abgas führt zu dessen Dehnung und zur Vergrößerung der Öffnung der Durchbrechung. Es wird gegenwärtig angenommen, dass die Dehnung und/oder die Elastizität des elastischen Abschnitts, in dem die Durchbrechung angeordnet ist, und die Führung des Abgases durch die geöffnete Durchbrechung in dem elastischen Abschnitt den vom Abgas ausgetragenen Schall verringert.

Bevorzugt weist der schlauchförmige elastische Abschnitt eine Elastizität auf, die unter Beaufschlagung durch unter Druck stehendes Abgas eine Verformung der Durchbrechung zu einer wesentlich größeren Öffnung erlaubt als ohne die Beaufschlagung durch das unter Druck stehende Abgas, z.B. eine Elastizität, die eine Verformung des Außendurchmessers des schlauchförmigen elastischen Abschnitts durch das unter Druck stehende Abgas auf zumindest 101%, zumindest 102%, zumindest103%, zumindest 104%, zumindest 105 %, bevorzugt bis zumindest 120 % des Außendurchmessers im nicht durch Abgas beaufschlagten Zustand zulässt. Alternativ kann der schlauchförmige elastische Abschnitt eine solche Elastizität aufweisen, dass seine Durchbrechung im durch Abgas beaufschlagten Zustand eine Öffnung aufweist, deren gegenüberliegende Kanten um zumindest 0,01 mm, zumindest 0,1mm, zumindest 0,2 mm oder zumindest 0,5 mm, oder zumindest 1 mm weiter voneinander beabstandet sind als im nicht durch Abgas beaufschlagten Zustand.

Die zumindest eine Durchbrechung in dem elastischen Abschnitt kann ohne Beaufschlagung durch unter Druck stehendes Abgas aneinander liegende Kanten aufweisen und z.B. in Form von zumindest einem Schlitz in dem elastischen Abschnitt ausgebildet sein. Als Schlitz in einem elastischen Abschnitt gebildete Durchbrechungen können senkrecht oder in einem davon abweichenden Winkel, z.B. von 30 bis 90° zur Oberfläche des elastischen Abschnitts angeordnet sein, gradlinig oder kurvig, voneinander beabstandet und/oder sich schneidend oder überlappend. Solche schlitzförmigen Durchbrechungen bilden bei der Dehnung des elastischen Abschnitts durch die Beaufschlagung mit unter Druck stehendem Abgas Öffnungen, durch die das Abgas austritt, wobei der vom Abgas ausgetragene Schall deutlich verringert wird. Schlitzförmige Durchbrechungen können z.B. als den elastischen Abschnitt durchquerende Schnitte ausgebildet sein, durch die im Wesentlichen kein Material des elastischen Abschnitts herausgetrennt wird bzw. bei denen das Material des elastischen Abschnitts vollständig erhalten bleibt. Der Schalldämpfer weist bevorzugt schlitzförmige gradlinige und/oder zumindest abschnittsweise gebogene und/oder abschnittsweise zueinander in einem Winkel angeordnete Durchbrechungen auf, deren Kanten ohne Beaufschlagung durch unter Druck stehendes Abgas aneinander anliegen, wobei sich die Durchbrechungen nicht kreuzen.

Der elastische Abschnitt weist bevorzugt eine einheitliche Dicke auf, z.B. von 0,5 bis 8 mm, bevorzugt 1 bis 3 mm. Optional weist der elastische Abschnitt eine geringe Dicke unmittelbar angrenzend an die Durchbrechung auf, z.B. in einem Bereich von 1 bis 3 mm vom Rand der Durchbrechung. Eine geringere Dicke angrenzend an die Durchbrechung kann, z.B. von 30 bis 70% der Dicke des elastischen Abschnitts sein, z.B. in eine Kante, die die Durchbrechung begrenzt, auslaufen, die die geringere Dicke aufweist und z.B. eine oder zwei gegenüberliegende Dichtlippen um die Durchbrechung bilden. Angrenzend an die Durchbrechung kann der elastische Abschnitt z.B. konisch auf die Kanten der Durchbrechung zulaufen.

Bevorzugt weist das Element zumindest 2, bevorzugter zumindest 3 beabstandete Durchbrechungen auf, die sich z.B. dann, wenn sie schlitzförmig sind und sich ihre Kanten ohne Beaufschlagung durch unter Druck stehendes Abgas berühren können und weiter optional zusätzlich überschneiden können.

Alternativ oder zusätzlich kann die zumindest eine Durchbrechung in dem elastischen Abschnitt auch in dem nicht durch unter Druck stehendes Abgas gedehnten Zustand eine Öffnung bilden, z.B. in Form einer Ausnehmung. Eine solche Ausnehmung wird ebenfalls bei Dehnung des elastischen Abschnitts durch das unter Druck stehende Abgas zu einer größeren Öffnung gedehnt.

Der elastische Abschnitt kann aus ein- oder mehrschichtigem Material gebildet sein.

Der elastische Abschnitt kann flächig sein, z.B. in dem Zustand, in dem er nicht durch unter Druck stehendes Abgas beaufschlagt ist, plan oder gewölbt am Gehäuse gehaltert sein, z.B. mit einem seine Kanten umfassenden Rahmen umfänglich befestigt sein, insbesondere abschnittsweise verschieblich. Alternativ kann der elastische Abschnitt ringförmig geschlossen sein und z.B. als Schlauch ausgebildet sein und mit einer Öffnung z.B. einer endständigen Öffnung, am Gehäuse befestigt sein, wobei weitere endständige Öffnungen verschlossen und/oder überdeckt sind, z.B. von dem Gehäuse. Ein elastischer Abschnitt, der als Schlauch ausgebildet ist, kann die Durchbrechungen, die z.B. schlitzförmig sind, z.B. in einem Winkel von bis zu 90°, bevorzugt von bis zu 75° oder bis zu 45°, bevorzugter bis 30° oder bis 10° zur Längsachse des Schlauchs aufweisen.

Für einen schlauchförmigen elastischen Abschnitt, der mehrere über den Umfang verteilte Durchbrechungen aufweist, z.B. in Form von Einschnitten etwa parallel zur Längsachse, ist bevorzugt, dass zumindest eines seiner Enden verschieblich gegenüber dem Gehäuse gehaltert ist, um bei Beaufschlagung mit unter Druck stehendem Abgas eine tonnenförmige Ausdehnung zu erleichtern, bei der sich die Durchbrechungen zu Auslassöffnungen ausdehnen. Die Halterung eines Endes eines schlauchförmigen elastischen Abschnitts kann durch Befestigung nur eines seiner Enden am Gehäuse erfolgen, wobei das andere Ende verschlossen ist und zumindest in Richtung der Längsachse des schlauchförmigen elastischen Elements beweglich ist, oder durch verschiebliche Halterung bzw. Führung des anderen Endes oder beider Enden am Gehäuse. Generell ist ein schlauchförmiger elastischer Abschnitt an seinen beiden Enden offen. Dies ist auch in den Figuren gezeigt. Bevorzugt ist der schlauchförmige elastische Abschnitt mit beiden seiner Enden am Gehäuse gehaltert, wobei zumindest eines der Enden verschieblich an dem Gehäuse gehaltert ist und das andere Ende z.B. an dem Gehäuse festgelegt sein kann. Bevorzugt sind beide Enden des schlauchförmigen elastischen Abschnitts verschieblich an dem Gehäuse gehaltert.

Der schlauchförmige elastische Abschnitt hat den Vorteil, dass er jeweils endständig Querschnittsöffnungen aufweist, so dass er nach Demontage des Schalldämpfers einfach zu reinigen ist, z.B. in einer Spülmaschine vollständig zu durchspülen ist. Die verschiebliche Anordnung des schlauchförmigen elastischen Abschnitts an zumindest einem seiner Enden an dem Gehäuse kann z.B. dadurch erfolgen, dass der elastische Abschnitt an seinen beiden Enden von dem Gehäuse umfasst ist und an zumindest einem Ende verschieblich und an dem anderen Ende an dem Gehäuse festgelegt ist oder ebenfalls verschieblich von dem Gehäuse umfasst ist. Das verschiebliche Haltern des schlauchförmigen elastischen Abschnitts an dem Gehäuse hat den Vorteil, dass sich der schlauchförmige elastische Abschnitt unter Druckbeaufschlagung aufblähen kann. Ein weiterer Vorteil des verschieblichen Halterns des schlauchförmigen elastischen Abschnitts liegt darin, dass der schlauchförmige Abschnitt einfach aus der Umfassung der Gehäuseabschnitte, die seine Enden umfassen, entfernt und wieder eingesetzt werden kann, z.B. vor bzw. nach einer Reinigung. So kann der schlauchförmige elastische Abschnitt auf einfache Weise von den seine Enden umfassenden Gehäuseabschnitten von dem Gehäuse entfernt werden und nach einer Reinigung wieder in diese Gehäuseabschnitte eingesetzt werden. Die Gehäuseabschnitte, die die Enden des schlauchförmigen elastischen Abschnitts zu dessen Halterung umfassen, sind bevorzugt zylindrisch ausgebildet und erstrecken sich nur über jeweils den endständigen Abschnitt des schlauchförmigen elastischen Abschnitts, z.B. über 1 bis 10% von dessen Gesamtlänge oder über jeweils einen endständigen Abschnitt des schlauchförmigen elastischen Abschnitts von 5 bis 20, z.B. 10 bis 15 mm, wenn dieser nicht mit unter Druck stehendem Abgas beaufschlagt ist.

Bei einem schlauchförmigen bzw. ringförmig geschlossenen elastischen Abschnitt, der z.B. durch einen elastischen Schlauch gebildet sein kann, weist die Durchbrechung z.B. eine Länge auf, die gleich dem 0,5-fachen bis 2-fachen, bevorzugt des einfachen bis 1,5-fachen Außendurchmessers des elastischen Elements ist.

Der elastische Abschnitt ist bevorzugt ein gummielastisches Material und besteht z.B. aus einem Elastomer, z.B. auf Basis von Gummi, bevorzugt synthetischem Gummi. Das gummielastische Material, aus dem der elastische Abschnitt gebildet ist, kann z.B. Polyethylen, Polypropylen, Polyurethan, Silikon und Mischungen und/oder Copolymeren dieser umfassen oder daraus bestehen.

Der elastische Abschnitt kann durchsichtig sein, so dass daran oder im Gehäuse abgelagerte Verunreinigungen des Abgases einfach erkennbar sind.

Auf der Oberfläche des elastischen Abschnitts, die dem Innenvolumen des Gehäuses gegenüberliegt, bzw. die bei Beaufschlagung mit unter Druck stehendem Abgas konvex verformt ist, kann optional ein Begrenzer mit Abstand oder unmittelbar angeordnet sein, der bevorzugt zumindest eine Durchbrechung, bevorzugt alle Durchbrechungen quert, z.B. in einem Winkel von 30° bis 90° zur Durchbrechung. Daher hemmt ein Begrenzer, der ein elastischer oder ein starrer Begrenzer sein kann und der gegenüber der Oberfläche des elastischen Elements angeordnet ist, zumindest in dem Zustand der Beaufschlagung durch unter Druck stehendes Abgas die Verformung des elastischen Abschnitts und verringert damit die Ausdehnung der Durchbrechungen. Der Begrenzer ist bevorzugt dehnbar. Der Begrenzer dient zur Begrenzung der Verformung des elastischen Abschnitts unter dem Druck des Abgases, so dass die maximale Öffnung der Durchbrechung beschränkt wird. Es hat sich gezeigt, dass ein Begrenzer, insbesondere aus elastischem Material, zu einer weiteren Verminderung des mit dem Abgas austretenden Schalls führt. Der Begrenzer kann z.B. streifenförmig sein. Ein dehnbarer Begrenzer kann aus elastischem Material bestehen, z.B. aus einem auf dem elastischen Abschnitt festgelegten Streifen aus elastischem Material, der die Durchbrechung quert. Für einen schlauchförmigen elastischen Abschnitts kann der Begrenzer als O-Ring ausgebildet sein, der mit Spannung um den elastischen Abschnitt angeordnet ist. Ein nicht-elastischer bzw. starrer Begrenzer kann durch einen Anschlag gebildet sein, der in dem nicht mit unter Druck stehendem Abgas beaufschlagten Zustand in einem Abstand von dem elastischen Abschnitt angeordnet ist, wobei der Abstand so bemessen ist, dass der elastische Abschnitt in dem mit unter Druck stehendem Abgas beaufschlagten Zustand gegen den Begrenzer stößt. Ein starrer Begrenzer ist z.B. vom Gehäuse gehalten.

Für eine einfach lösbare Verbindung mit der Abgasleitung eines Sauggreifers kann der Schalldämpfer eine Ausnehmung aufweisen, die mit Klemmung einen Abschnitt eines Sauggreifers umfasst und/oder einen Abschnitt aufweisen, der mit Klemmung zwischen zwei Abschnitte eines Sauggreifers anordnbar ist. Die Ausnehmung kann z.B. ausgebildet sein, einen Träger des Sauggreifers, eine Zuleitung für Druckluft und/oder das Zentralrohr mit Klemmung abschnittsweise zu umfassen, durch das das Abgas strömt. Ein Abschnitt, der bevorzugt ein äußerer Abschnitt des Gehäuses ist, kann z.B. ausgebildet sein, um das Gehäuse abschnittsweise zwischen einem Träger des Sauggreifers, einer Zuleitung für Druckluft und/oder dem Zentralrohr mit Klemmung anzuordnen.

Die Erfindung wird nun genauer anhand des Beispiels mit Bezug auf die Figuren beschrieben, die schematisch in
- Figur 1 eine Ausführungsform des Schalldämpfers im Schnitt ohne Belastung durch unter Druck stehendes Abgas,
- Figur 2 die Ausführungsform von Figur 1 im Schnitt mit Belastung durch unter Druck stehendes Abgas,
- Figur 3 eine um 90° gedrehte Aufsicht auf Figur 2 mit Belastung durch unter Druck stehendes Abgas,
- Figur 4 eine bevorzugte Ausführungsform des Schalldämpfers in aufgeschnittener Darstellung ohne Belastung durch unter Druck stehendes Abgas und in
- Figur 5 den Schalldämpfer von Figur 4 mit zwei alternativen Begrenzern zeigen.

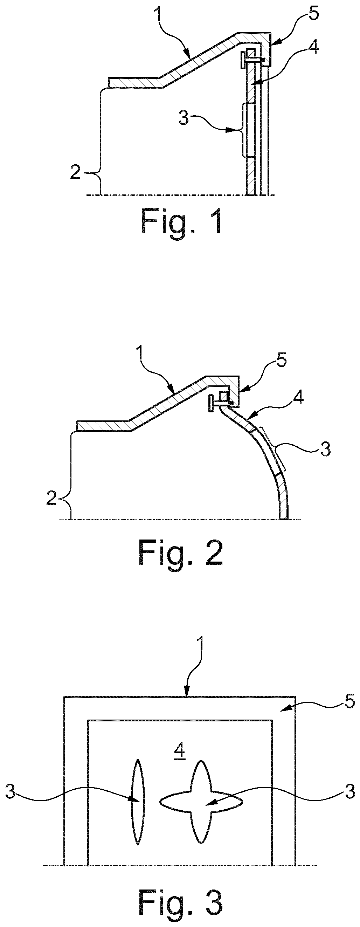

Die Figur 1 zeigt einen Schnitt durch ein Gehäuse 1 einer Vorrichtung, das insgesamt rund oder eckig sein kann und einen Einlass 2 zur Verbindung mit einer Abgasleitung aufweist.

Der Auslass des Gehäuses wird durch die zumindest eine Durchbrechung 3 gebildet, die in dem elastischen Abschnitt 4 ausgebildet ist. Der elastische Abschnitt 4 ist mittels eines Rahmens 5, der einstückig mit dem Gehäuse 1 ausgebildet ist, gehaltert. Für eine verschiebliche Halterung kann der elastische Abschnitt 4 z.B. ein Langloch aufweisen, durch das ein mit dem Gehäuse 1 bzw. dessen Rahmen 5 ein Befestigungselement geführt ist. Dabei zeigt die Figur 1 den Zustand, in dem das Gehäuse nicht durch unter Druck stehendes Abgas beaufschlagt ist, so dass der elastische Abschnitt 4 in einem entspannten Zustand vorliegt und die Durchbrechung 3 eine kleinere Öffnung bildet, als in dem Zustand, in dem der elastische Abschnitt 4 durch unter Druck stehendes Abgas beaufschlagt ist. Entsprechend einer bevorzugten Ausführungsform ist die zumindest eine Durchbrechung 3 in dem elastischen Abschnitt 4 als durchgehender Schnitt ausgebildet, so dass die Kanten der Durchbrechung 3 in diesem Zustand aneinander anliegen.

Die Figur 2 zeigt den Schalldämpfer von Figur 1 in dem Zustand, in dem der elastische Abschnitt 4 durch unter Druck stehendes Abgas, das durch den Einlass 2 in das Gehäuse eingeführt wird, beaufschlagt ist. Der elastische Abschnitt 4 wird durch den Druck des Abgases gedehnt und die Durchbrechung 3 bildet eine größere Öffnung, als in dem Zustand ohne Beaufschlagung durch das unter Druck stehende Abgas.

Die Figur 3 zeigt das Gehäuse 1 in Aufsicht auf den elastischen Abschnitt 4, wobei deutlich wird, dass die Durchbrechungen 3 auch dann eine Öffnung bilden, wenn sie schlitzförmig sind und ihre Kanten ohne Beaufschlagung durch Abgas unter Druck aneinander anliegen, z.B. wenn die Durchbrechungen 3 durch einen durch die Dicke des elastischen Abschnitts 4 gehenden Einschnitt gebildet sind.

Eine Durchbrechung 3 ist durch einen einfachen Einschnitt gebildet und eine andere Durchbrechung 3 durch einen kreuzförmigen Einschnitt, deren Kanten in dem Zustand ohne Beaufschlagung durch unter Druck stehendes Abgas aneinander anliegen.

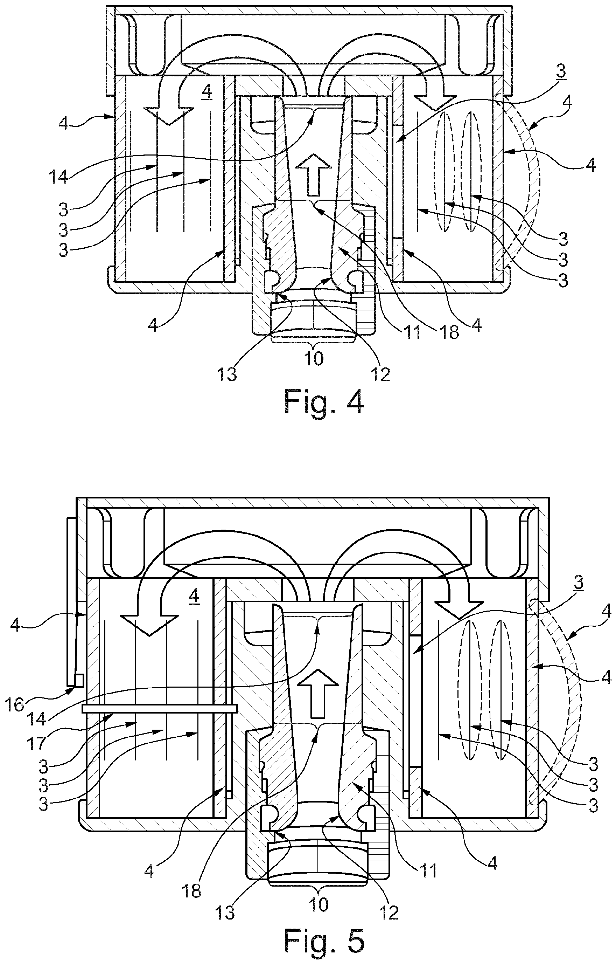

Die Figur 4 zeigt einen erfindungsgemäßen Schalldämpfer in einer Schnittdarstellung mit einem Sauggreifer, von dem eine Ansaugöffnung 10 gezeigt ist, an die sich ein Zentralrohr 11 anschließt, dessen gewölbte Innenfläche 12 durch eine Druckluftöffnung 13 mit Druckluft angeströmt wird. Das unter Druck stehende Abgas aus der Druckluft und durch die Ansaugöffnung 10 angesaugter Luft tritt aus der Austrittsöffnung 14 aus, die mit einer Abgasleitung verbunden ist. Der Einlass 2 des Gehäuses 1 leitet das unter Druck stehende Abgas in eine endständige Öffnung jeweils eines von zwei elastischen Abschnitten 4, die jeweils schlauchförmig ausgebildet sind. Die elastischen Abschnitte 4 sind dadurch verschieblich im Gehäuse 1 gehaltert, dass ihre Enden von einem Gehäuse 1 umfasst sind, so dass diese Enden bei Verkürzung des elastischen Abschnitts entlang dessen Längsachse in dem Gehäuse 1 verschieblich sind und gehalten werden. Die Verkürzung des elastischen Abschnitts 4 entlang dessen Längsachse ergibt sich bei Beaufschlagung mit unter Druck stehendem Abgas, da sich dann der elastische Abschnitt 4 radial dehnt und die Durchbrechungen 3 größere Öffnungen bilden als im nicht mit Druck durch Abgas beaufschlagten Zustand. Die Durchbrechungen 3 sind hier als Einschnitte entlang der Längsachse des schlauchförmigen elastischen Abschnitts 4 gezeigt, deren Kanten ohne Beaufschlagung mit Druckgas aneinander anliegen. Gestrichelt gezeigt sind die Durchbrechungen 3 im elastischen Abschnitt 4 in dem Zustand, in dem dieser durch unter Druck stehendes Abgas belastet ist.

Der mit dem Schalldämpfer verbundene Sauggreifer kann z.B. einer sein, der in der EP 2415696 B1 beschrieben ist.

Die Strömung des unter Druck stehenden Abgases, das sich z.B. aus der Druckluft, die in das Zentralrohr gedrückt wird, und der durch die Ansaugöffnung einströmenden Umgebungsluft zusammensetzt, wird durch die Blockpfeile angedeutet.

Die Figur 5 zeigt die Ausführungsform von Figur 4, wobei für den linken schlauchförmigen elastischen Abschnitt 4 in dem nicht von unter Druck stehendem Abgas beaufschlagten Zustand zusätzlich ein optionaler Begrenzer 16, 17 gezeigt ist. Der starre Begrenzer 16 ist zumindest einseitig am Gehäuse 1 festgelegt und in diesem Zustand in einem Abstand vom elastischen Abschnitt 4 angeordnet, so dass sich der elastische Abschnitt 4 bei Beaufschlagung durch unter Druck stehendes Abgas bis an den starren Begrenzer 16 verformen kann und anschließend die Verformung des elastischen Abschnitts 4 durch den starren Begrenzer 16 gehemmt wird.

Ein elastischer Begrenzer 17 in Form eines elastischen O-Rings, der in jedem Zustand auf dem elastischen Abschnitt 4 aufliegt, quert die Durchbrechungen 3 etwa senkrecht zur Längsachse des schlauchförmigen elastischen Abschnitts 4. Bei Beaufschlagung durch unter Druck stehendes Abgas dehnt sich der elastische Begrenzer 17 mit der konvexen Verformung des schlauchförmigen elastischen Abschnitts 4 und hemmt dabei die Öffnung der Durchbrechungen. Es hat sich gezeigt, dass ein Begrenzer, der ein starrer Begrenzer 16, bevorzugt ein elastischer Begrenzer 17 ist, zu einer stärkeren Dämpfung des vom Abgas ausgetragenen Schalls führt, insbesondere bei höherer Belastung des elastischen Abschnitts 4 durch unter Druck stehendes Abgas.

Mit dem Gehäuse 1 ist eine klemmende Ausnehmung 18 verbunden, die das Zentralrohr 11 abschnittsweise umfänglich aufnimmt, so dass durch diese Ausnehmung 18 der Schalldämpfer mit dem Sauggreifer verbunden ist.

### Beispiel: Verfahren zur Schalldämpfung

Ein Schalldämpfer entsprechend Figur 4 mit dem dort gezeigten Sauggreifer, an dessen Ansaugöffnung 10 eine Saugglocke angebracht war, wies schlauchförmige elastische Abschnitte 4 aus Schlauch aus Polyethylen mit einer Wandstärke von 1,5 bis 4 mm auf, in dem Einschnitte einer Länge, die gleich dem Außendurchmesser des Schlauchs ist, entlang der Längsachse die Durchbrechungen 3 bilden. Bei Zuleitung von ca. 110 1/min Druckluft ergab sich ein Abgasstrom von ca. 450 bis 500 1/min Luft aus angesaugter Luft und Druckluft. Der Schall wurde in einem Abstand von 1 m mit einem Schalldruckmessgerät gemessen. Ohne den Schalldämpfer wurde ein Schall von ca. 87 ± 5 dBA gemessen, mit dem Schalldämpfer von ca. 72 ± 2 dBA, was einer Verminderung des Schalls um etwa den Faktor 32 entspricht.

**Bezugszeichenliste:**

| | |
|---|---|
| 1 Gehäuse | 12 gewölbte Innenfläche |
| 2 Einlass | 13 Druckluftöffnung |
| 3 Durchbrechung | 14 Austrittsöffnung |
| 4 elastischer Abschnitt | 16 starrer Begrenzer |
| 5 Rahmen | 17 elastischer Begrenzer |
| 10 Ansaugöffnung | 18 klemmende Ausnehmung |
| 11 Zentralrohr | |

## Patentansprüche

1. Schalldämpfer mit einem Gehäuse (1) mit einem Einlass (2), der mit der Abgasleitung eines Sauggreifers zu verbinden ist und mit zumindest einem zur Umgebung offenen Auslass, der durch zumindest eine Durchbrechung (3) zumindest eines elastischen Abschnitts (4) des Gehäuses (1) gebildet wird, **dadurch gekennzeichnet, dass** der elastische Abschnitt (4) schlauchförmig ist, seine endständigen Öffnungen von dem Gehäuse überdeckt sind und zumindest eines seiner Enden entlang der Längsachse des elastischen Abschnitts (4) verschieblich an dem Gehäuse gehaltert ist.

2. Schalldämpfer nach Anspruch 1, **dadurch gekennzeichnet, dass** der schlauchförmige elastische Abschnitt (4) an beiden seiner Enden verschieblich am Gehäuse (1) gehaltert ist.

3. Schalldämpfer nach einem der voranstehenden Ansprüche, **dadurch gekennzeichnet, dass** der elastische Abschnitt (4) eine Elastizität aufweist, die unter Beaufschlagung durch unter Druck stehendes Abgas eine Verformung der Durchbrechung zu einer größeren Öffnung erlaubt, bei der die gegenüberliegenden Kanten der Durchbrechung um zumindest 0,01 mm weiter voneinander entfernt sind, als ohne die Beaufschlagung durch das unter Druck stehende Abgas.

4. Schalldämpfer nach einem der voranstehenden Ansprüche, **dadurch gekennzeichnet, dass** die Durchbrechung (3) ein Schlitz ist, dessen Kanten ohne die Beaufschlagung durch unter Druck stehendes Abgas aneinander anliegen.

5. Schalldämpfer nach einem der Ansprüche 1 bis 3, **dadurch gekennzeichnet, dass** die Durchbrechung (3) eine Ausnehmung ist, deren Kanten ohne die Beaufschlagung durch unter Druck stehendes Abgas eine Öffnung umfassen.

6. Schalldämpfer nach einem der voranstehenden Ansprüche, **dadurch gekennzeichnet, dass** an die Durchbrechung (3) eine ableitende Leitung angeschlossen ist.

7. Schalldämpfer nach einem der voranstehenden Ansprüche, **dadurch gekennzeichnet, dass** der elastische Abschnitt (4) an einem seine endständigen umlaufenden Kanten umfassenden Rahmen (5) anliegt, der am Gehäuse (1) angeordnet ist.

8. Schalldämpfer nach einem der Ansprüche 1 und 3 bis 7, **dadurch gekennzeichnet, dass** der elastische Abschnitt (4) ringförmig geschlossen ist und eine seiner endständigen umlaufenden Kanten an dem Gehäuse (1) befestigt ist.

9. Schalldämpfer nach einem der voranstehenden Ansprüche, **dadurch gekennzeichnet, dass** der elastische Abschnitt (4) mehrschichtig ist.

10. Anordnung mit einem Sauggreifer und einem Schalldämpfer nach einem der voranstehenden Ansprüche, **dadurch gekennzeichnet, dass** das Gehäuse (1) mit der Abgasleitung des Sauggreifers verbunden ist, die mit einer Druckluftöffnung (13) für Druckgas und einer Ansaugöffnung (10) zum Ansaugen von Umgebungsluft verbunden ist.

11. Schalldämpfer oder Anordnung nach einem der voranstehenden Ansprüche, **gekennzeichnet durch** zumindest einen Begrenzer, der ein elastischer Begrenzer (16) oder ein starrer Begrenzer (17) ist, der gegenüber der Oberfläche des elastischen Abschnitts (4) angeordnet ist und zumindest in dem Zustand der Beaufschlagung durch unter Druck stehendes Abgas die Verformung des elastischen Abschnitts (4) hemmt.

12. Schalldämpfer oder Anordnung nach einem der voranstehenden Ansprüche, **dadurch gekennzeichnet, dass** das Gehäuse (1) eine klemmende Ausnehmung (18) und/oder einen äußeren Abschnitt zur klemmenden Anordnung an einem Träger des Sauggreifers, einer Zuleitung des Sauggreifers für Druckluft und/oder dem Zentralrohr (11) des Sauggreifers aufweist.

13. Schalldämpfer oder Anordnung nach einem der voranstehenden Ansprüche, **dadurch gekennzeichnet, dass** die Durchbrechung schlitzförmig ist und sich in einem Winkel von bis zu 45°, bevorzugter bis 10°, zur Längsachse des Schlauchs erstreckt.

14. Schalldämpfer oder Anordnung nach einem der voranstehenden Ansprüche, **dadurch gekennzeichnet, dass** die Durchbrechung schlitzförmig ist und sich über eine Länge entsprechend des 0,5-fachen bis 2-fachen Außendurchmesser des elastischen Abschnitts (4) erstreckt.

15. Schalldämpfer oder Anordnung nach einem der voranstehenden Ansprüche, **dadurch gekennzeichnet, dass** der schlauchförmige elastische Abschnitt eine Elastizität aufweist, die eine Verformung des Außendurchmessers des schlauchförmigen elastischen Abschnitts durch das unter Druck stehende Abgas auf zumindest 101 %, bevorzugt bis zumindest 102 % des Außendurchmessers im nicht durch Abgas beaufschlagten Zustand zulässt.

16. Schalldämpfer oder Anordnung nach einem der voranstehenden Ansprüche, **dadurch gekennzeichnet, dass** der elastische Abschnitt (4) durchsichtig ist.

17. Verfahren zur Schalldämpfung durch Beaufschlagen eines Gehäuses (1) eines Schalldämpfers mit unter Druck stehendem Abgas, wobei der Schalldämpfer in seinem Gehäuse zumindest einen elastischen Abschnitt (4) mit zumindest einer Durchbrechung (3) aufweist, die den Auslass des Gehäuses bildet und unter Beaufschlagung durch das unter Druck stehende Abgas die zumindest eine Durchbrechung (3) eine wesentlich größere Öffnung bildet als ohne die Beaufschlagung durch das unter Druck stehende Abgas, **dadurch gekennzeichnet, dass** der elastische Abschnitt (4) schlauchförmig ist, seine endständigen Öffnungen von dem Gehäuse überdeckt sind und zumindest eines seiner Enden entlang der Längsachse des elastischen Abschnitts (4) verschieblich an dem Gehäuse gehaltert ist und sich bei Beaufschlagung mit dem Abgas gegen das Gehäuse verschiebt.

18. Verfahren nach Anspruch 17, **dadurch gekennzeichnet, dass** das unter Druck stehende Abgas eine Temperatur von maximal 70°C aufweist.

19. Verfahren nach einem der Ansprüche 17 bis 18, **dadurch gekennzeichnet, dass** der elastische Abschnitt an beiden seiner Enden von dem Gehäuse verschieblich umfasst ist.

20. Verfahren nach einem der Ansprüche 17 bis 19, **dadurch gekennzeichnet, dass** der schlauchförmige elastische Abschnitt durch Bewegen aus den seine Enden umfassenden Gehäuseabschnitten von dem Gehäuse entfernt wird, gereinigt wird und mit seinen Enden in den diese umfassenden Gehäuseabschnitten angeordnet wird.

## Claims

1. Silencer having a housing (1) with an inlet (2) that is to be connected to the exhaust gas pipe of a suction gripper, and with at least one outlet open to the surroundings that is formed by at least one breach (3) in at least one elastic segment (4) of the housing (1), **characterized in that** the elastic segment (4) is tube-shaped, **in that** its terminal openings are covered by the housing (1) and **in that** at least one of its ends is slidably supported on the housing (1) along the longitudinal axis of the elastic segment (4).

2. Silencer according to claim 1, **characterized in that** the tube-shaped elastic segment (4) is slidably supported at both of its ends at the housing (4).

3. Silencer according to one of the preceding claims, **characterized in that** the elastic segment (4) has an elasticity that under the application of pressurized exhaust gas allows a deformation of the breach into a larger opening, at which the opposite edges of the breach are spaced at least 0.01 mm farther apart from one another than without the application of the pressurized exhaust gas.

4. Silencer according to one of the preceding claims, **characterized in that** the breach (3) is a slit, the edges of which without the application of pressurized exhaust gas contact one another.

5. Silencer according to one of claims 1 to 3, **characterized in that** the breach (3) is a recess, the edges of which without the application of pressurized exhaust gas encompass an opening.

6. Silencer according to one of the preceding claims, **characterized in that** a draining pipe is connected to the breach (3).

7. Silencer according to one of the preceding claims, **characterized in that** the elastic segment (4) is in contact with a frame (5) that encompasses the terminal circumferential edges of the elastic segment (4) and that is arranged at the housing (1).

8. Silencer according to one of claims 1 and 3 to 7, **characterized in that** the elastic segment (4) is circularly closed and one of its terminal circumferential edges is attached to the housing (1).

9. Silencer according to one of the preceding claims, **characterized in that** the elastic segment (4) is multi-layered.

10. Arrangement having a suction gripper and a silencer according to one of the preceding claims, **characterized in that** the housing (1) is connected to the exhaust gas pipe of the suction gripper, which exhaust gas pipe is connected to a pressurized air vent (13) for pressurized gas and to a suction intake (10) for sucking in of surrounding air.

11. Silencer or arrangement according to one of the preceding claims, **characterized by** at least one limiter that is an elastic limiter (16) or a rigid limiter (17), that is arranged opposite of the surface of the elastic segment (4) and that inhibits the deformation of the elastic segment (4) at least in the state of application of pressurized exhaust gas.

12. Silencer or arrangement according to one of the preceding claims, **characterized in that** the housing (1) has a clamping recess (18) and/or an outer segment for the clamping arrangement on a supporter of the suction gripper, on a feed line for pressurized air of the suction gripper, and/or on the central pipe (11) of the suction gripper.

13. Silencer or arrangement according to one of the preceding claims, **characterized in that** the breach (3) is slit-shaped and extends at an angle of up to 45°, preferably up to 10°, to the longitudinal axis of the tube.

14. Silencer or arrangement according to one of the preceding claims, **characterized in that** the breach (3) is slit-shaped and extends over a length equivalent to 0.5 times to 2 times the outer diameter of the elastic segment (4).

15. Silencer or arrangement according to one of the preceding claims, **characterized in that** the tube-shaped elastic segment (4) has an elasticity that allows a deformation of the outer diameter of the tube-shaped elastic segment (4) by the pressurized exhaust gas to at least 101 %, preferably up to at least 102 % of the outer diameter in the state without application of exhaust gas.

16. Silencer or arrangement according to one of the preceding claims, **characterized in that** the elastic segment (4) is translucent.

17. Process for silencing by application of pressurized exhaust gas to the housing (1) of a silencer, wherein the silencer in its housing (1) has at least one elastic segment (4) with at least one breach (3) that forms the outlet of the housing (1) and that forms a significantly larger opening under the application of the pressurized exhaust gas than without the application of the pressurized exhaust gas, **characterized in that** the elastic segment (4) is tube-shaped, **in that** its terminal openings are covered by the housing (1) and **in that** at least one of its ends is supported slidably along the longitudinal axis of the elastic segment (4) and slides relative to the housing upon application of the exhaust gas.

18. Process according to claim 17, **characterized in that** the pressurized exhaust gas has a temperature of at maximum 70 °C.

19. Process according to one of claims 17 to 18, **characterized in that** the elastic segment (4) is slidably encompassed at both of its ends by the housing.

20. Process according to one of claims 17 to 19, **characterized in that** the tube-shaped elastic segment (4) is removed from the housing (1) by moving out of the housing segments encompassing the ends of the elastic segment (4), is cleaned and is arranged with its ends inside the housing segments encompassing said ends.

## Revendications

1. Amortisseur de bruit comportant un boîtier (1) avec une entrée (2) à relier avec la conduite d'échappement d'une ventouse de préhension et avec au moins une sortie ouverte aux environs, qui est formée par au moins une aperture (3) d'au moins une section élastique (4) du boîtier (1), **caractérisé en ce que** la section élastique (4) est tubulaire, ses ouvertures terminales sont couvertes par le boîtier et au moins l'une de ses extrémités est montée sur le boîtier de manière à être déplaçable le long de l'axe longitudinal de la section élastique (4).

2. Amortisseur de bruit selon la revendication 1, **caractérisé en ce que** la section élastique (4) tubulaire est montée à ses deux extrémités de manière déplaçable sur le boîtier (1).

3. Amortisseur de bruit selon l'une des revendications précédentes, **caractérisé en ce que** la section élastique (4) présente une élasticité qui permet une déformation de l'aperture en une ouverture plus grande sous l'application de gaz d'échappement sous pression, les bords opposés de l'aperture étant plus éloignés l'un de l'autre d'au moins 0,01 mm que sans l'application du gaz d'échappement sous pression.

4. Amortisseur de bruit selon l'une des revendications précédentes, **caractérisé en ce que** l'aperture (3) est une fente, dont les bords sont contigus sans l'application de gaz d'échappement sous pression.

5. Amortisseur de bruit selon l'une des revendications 1 à 3, **caractérisé en ce que** l'aperture (3) est une cavité, dont les bords comprennent une ouverture sans l'application de gaz d'échappement sous pression.

6. Amortisseur de bruit selon l'une des revendications précédentes, **caractérisé en ce que** l'aperture (3) est reliée à une conduite d'évacuation.

7. Amortisseur de bruit selon l'une des revendications précédentes, **caractérisé en ce que** la section élastique (4) est contiguë à un cadre (5) renfermant ses bords terminaux périphériques, le cadre étant disposé au niveau du boîtier (1).

8. Amortisseur de bruit selon l'une des revendications 1 et 3 à 7, **caractérisé en ce que** la section élastique (4) est fermée de façon annulaire et l'un de ses bords terminaux périphériques est fixé au boîtier (1).

9. Amortisseur de bruit selon l'une des revendications précédentes, **caractérisé en ce que** la section élastique (4) comporte plusieurs couches.

10. Agencement comportant une ventouse de préhension et un amortisseur de bruit selon l'une des revendications précédentes, **caractérisé en ce que** le boîtier (1) est reliée à la conduite d'échappement de la ventouse de préhension, qui est reliée à une ouverture à air comprimé (13) pour du gaz comprimé et une ouverture d'aspiration (10) pour aspirer de l'air ambiant.

11. Amortisseur de bruit ou agencement selon l'une des revendications précédentes, **caractérisé par** au moins un limiteur, qui est un limiteur élastique (16) ou un limiteur rigide (17), qui est disposé en face de la surface de la section élastique (4) et enraye la déformation de la section élastique (4) au moins à l'état de l'application de gaz d'échappement sous pression.

12. Amortisseur de bruit ou agencement selon l'une des revendications précédentes, **caractérisé en ce que** le boîtier (1) présente une cavité serrante (18) et/ou une section extérieure pour l'agencement serrant sur un support de la ventouse de préhension, sur une conduite d'alimentation d'air comprimé de la ventouse de préhension et/ou sur le tuyau central (11) de la ventouse de préhension.

13. Amortisseur de bruit ou agencement selon l'une des revendications précédentes, **caractérisé en ce que** l'aperture a la forme d'une fente et s'étend selon un angle de jusqu'à 45°, plus préférentiellement jusqu'à 10°, par rapport à l'axe longitudinal du tuyau.

14. Amortisseur de bruit ou agencement selon l'une des revendications précédentes, **caractérisé en ce que** l'aperture a la forme d'une fente et s'étend sur une longueur correspondant à 0.5 fois jusqu'à 2 fois le diamètre extérieur de la section élastique (4).

15. Amortisseur de bruit ou agencement selon l'une des revendications précédentes, **caractérisé en ce que** la section élastique tubulaire présente une élasticité permettant une déformation du diamètre extérieur de la section élastique (4) tubulaire par le gaz d'échappement sous pression à au moins 101 %, de préférence jusqu'à au moins 102 % du diamètre extérieur à l'état sans l'application de gaz d'échappement.

16. Amortisseur de bruit ou agencement selon l'une des revendications précédentes, **caractérisé en ce que** la section élastique (4) est transparente.

17. Procédé d'amortissement de bruit par l'application à un boîtier (1) comportant un amortisseur de bruit, de gaz d'échappement sous pression, dans lequel l'amortisseur de bruit présente dans son boîtier au moins une section élastique (4) avec au moins une aperture (3), qui forme la sortie du boîtier, et l'au moins une aperture (3) forme, sous l'application du gaz d'échappement sous pression, une ouverture sensiblement plus grande que sans l'application du gaz d'échappement sous pression, **caractérisé en ce que** la section élastique (4) est tubulaire, ses ouvertures terminales sont couvertes par le boîtier et au moins l'une de ses extrémités est montée de façon déplaçable le long de l'axe longitudinal de la section élastique (4) et se déplace contre le boîtier sous l'application du gaz d'échappement.

18. Procédé selon la revendication 17, **caractérisé en ce que** le gaz d'échappement sous pression présente une température maximale de 70°C.

19. Procédé selon l'une des revendications 17 à 18, **caractérisé en ce que** la section élastique est renfermée à ses deux extrémités par le boîtier de façon déplaçable.

20. Procédé selon l'une des revendications 17 à 19, **caractérisé en ce que** la section élastique tubulaire est enlevée du boîtier au moyen de son déplacement en dehors des sections de boîtier renfermant ses extrémités, est nettoyée et est disposée avec ses extrémités dans les sections de boîtier les renfermant.
